# EUROPÄISCHE PATENTSCHRIFT

(11) **EP 2 220 632 B1**
(45) Veröffentlichungstag und Bekanntmachung des Hinweises auf die Patenterteilung: **12.10.2016**
(21) Anmeldenummer: 08761118.2
(22) Anmeldetag: 17.06.2008
(51) Int. Cl.: G08B 25/01

(54) **VERFAHREN UND SYSTEM ZUM ABSETZEN EINES NOTRUFS**
METHOD AND SYSTEM FOR PLACING AN EMERGENCY CALL
PROCÉDÉ ET SYSTÈME POUR ENVOYER UN APPEL DE SECOURS

(30) Priorität: 06.12.2007 DE 102007059024; 09.02.2008 DE 102008008371
(43) Veröffentlichungstag der Anmeldung: 25.08.2010
(73) Patentinhaber: Continental Teves AG & Co. oHG, 60488 Frankfurt (DE)
(72) Erfinder: STÄHLIN, Ulrich, 65760 Eschborn (DE); RIETH, Peter, 65343 Eltville (DE); NEUMANN, Karl-Thomas, 61479 Glashütten (DE)
(74) Vertreter: Bonn, Roman Klemens
(86) Internationale Anmeldenummer: PCT/EP2008/057632
(87) Internationale Veröffentlichungsnummer: WO 2009/071343

(56) Entgegenhaltungen:
- EP-A- 1 143 400
- EP-A- 1 280 120
- EP-A- 1 814 093
- EP-A1- 1 494 488
- DE-A1-102005 021 115
- US-A- 5 625 668
- US-A1- 2002 044 062
- US-A1- 2004 070 515
- US-B1- 6 175 329
- US-B1- 6 337 641

## Beschreibung

Die vorliegende Erfindung betrifft das Absetzen eines Notrufs von einem verunfallten Fahrzeug. Insbesondere betrifft die Erfindung ein System zum Absetzen eines solchen Notrufs an eine Rettungsleitstelle, ein korrespondierendes Verfahren sowie auch ein hiermit im Zusammenhang stehendes Computerprodukt sowie ein computerlesbares Medium.

Die ansteigende Verkehrsdichte an Kraftfahrzeugen auf dem Straßennetz, welches hinsichtlich seiner Kapazität an die Ausbaugrenzen stößt, führt zu einem erhöhten Unfallrisiko. Das Unfallrisiko kann zwar mit modernen Fahrassistenzsystemen und dergleichen minimiert, jedoch nicht ausgeschlossen werden. Im Falle eines Verkehrsunfalls ist insbesondere eine schnelle Hilfe geschädigter Personen erforderlich. Das Einsatzgebiet der vorliegenden Erfindung erstreckt sich auf eine zu diesem Zwecke geschaffene technische Unfalllogistik.

Aus dem allgemeinen Stand der Technik ist im europäischen Raum ein automatisiertes Notrufsystem unter der Bezeichnung "eCall" bekannt, bei welchem im Falle eines Unfalls automatisch eine Meldung, eben dieser eCall, an eine Rettungsleitstelle abgesetzt wird. Zu diesem Zwecke sind die Fahrzeuge mit Unfallüberwachungseinheiten ausgestattet. Bei der Unfallüberwachungseinheit handelt es sich um eine an das Bordnetz des Fahrzeuges angeschlossene Elektronikeinheit, an die eingangsseitig ein Unfallsensor angeschlossen ist. Beim Unfallsensor kann es sich im einfachsten Falle um einen Beschleunigungssensor handeln, der ab einem vorgebbaren Schwellwert einer negativen Beschleunigung des Fahrzeugs, der oberhalb der durch die normalen Bremskräfte des Fahrzeugs verursachten negativen Beschleunigungen liegt, ein Unfallsignal ausgibt. Hierauf hin ermittelt die Unfallüberwachungseinheit per angeschlossenem Ortungssystem, vorzugsweise GPS-Ortungssystem der Fahrzeugnavigation, die aktuellen Positionsdaten des Fahrzeugs. Diese Informationen werden in Form eines Notrufs automatisch der Notrufzentrale zugeleitet, welche den Sachverhalt klärt und bei Bedarf Hilfe im In- und Ausland anfordert. Die Rettungskräfte können durch Kenntnis vom genauen Unfallort sowie Zusatzinformationen, wie Personendaten, Unfallzeitpunkt und dergleichen optimal agieren. Neben einer Aktivierung der Unfallhilfe per automatischer Sensorik ist auch ein manuelles Auslösen per Notruftaste im Fahrzeug vorgesehen. Darüber hinaus besteht die Möglichkeit, dass die Rettungsleitstelle einen Sprachkontakt zu den Insassen des Fahrzeugs aufnehmen kann, um beispielsweise weitere Informationen über die Schwere des Unfalls zu erhalten. Zu diesem Zwecke und zum Absetzen des Notrufs an die Rettungsleitstelle ist weiterhin eine Mobilfunkeinheit erforderlich, welche mit der Unfallüberwachungseinheit in Verbindung steht. Optional ist die Übermittlung von Daten anderer Bordsicherheitssysteme, wie Airbagausstattung, Sicherheitsgurtsensor, Überschlagsensor möglich, welche Rückschlüsse über die Schwere des Unfallereignisses sowie die Zahl der Insassen ermöglichen.

Aus der EP 1 814 093 A1 geht ein solches System und Verfahren hervor. Beim Auslösen des Notrufs werden die geographischen Unfallkoordinaten zusammen mit Identifikationsdaten des Fahrzeugs von einer Mobilfunkeinheit in digitaler Form über ein Mobilfunknetz zu der zentralen Rufeinheit in Form einer digitalen Datennachricht übertragen. Die so übertragenen Daten werden von der zentralen Rufeinheit zu einem Meldebild aufbereitet und auf einer zugriffsgestützten Internetseite bereitgestellt, die mit graphischen Kartenmaterial versehen ist, aus dem ersichtlich ist, wo sich das Fahrzeug befindet. Zusätzlich können durch einen Telefonanruf Informationen an eine lokale Notrufabfragestelle des Fahrzeugs oder durch eine zentrale Notrufabfragestelle, die die lokale Rettungsleitstelle durch einen Telefonanruf informiert, übermittelt werden. Das Abfragen des Meldebilds erfolgt über das Internet durch die örtlich zuständige lokale Rettungsleitstelle nach Authentifizierung am Internetserver. Nachteilig bei dieser technischen Lösung erweist sich die vollständig graphische Kommunikation per Meldebild, was die Übertragung wichtiger Zusatzinformationen wegen festgelegter Datenformate erschwert. Ferner ist ein Internetzugang und weitere gerätetechnische Ausrüstung erforderlich.

Es ist bereits versucht worden, Elemente der ursprünglich im Rahmen von Notrufsystemen praktizierten Sprachkommunikation in moderne automatische Notrufsysteme mit einfließen zu lassen. Hierbei kommt eine so genannte Text-to-Speech-Anwendung im Fahrzeug zur Anwendung. Text-to-Speech-Anwendungen konvertieren eine Textinformation in eine Sprachinformation, was eine Art automatisches Vorlesen von Text entspricht. Es wird per Ortungssystem, vorzugsweise Globale Position System (GPS), bestimmt, an welcher Position in einer digitalen Karte sich das verunfallte Fahrzeug befindet. Diese Position, umfassend Straßenname und Hausnummer, wird mittels Text-to-Speech-Anwendung in Sprache umgewandelt, die dann automatisch über einen Sprachkanal, vorzugsweise per Mobilfunk, an die Rettungsleitstelle übermittelt wird.

Nachteilig bei dieser technischen Lösung ist jedoch der hiermit verbundene große technische Aufwand im Fahrzeug. Insbesondere muss die Unfallüberwachungseinheit sowie die erforderlichen peripheren elektronischen Einheiten den gesamten vorstehend geschilderten Funktionsumfang umsetzen können.

Das Dokument US 6 175 329 B1 offenbart ein Verfahren gemäß dem Obergriff des Anspruchs 1 und ein System gemäß dem Obergriff des Anspruchs 3. Es ist daher die Aufgabe der vorliegenden Erfindung ein gattungsgemäßes Verfahren bzw. System zum Absetzen eines Notrufs von einem verunfallten Fahrzeug an eine Rettungsleitstelle per Text-to-Speech-Methode derart weiter zu verbessern, dass mit minimalem technischen Aufwand eine zuverlässige Notruflogistik sichergestellt wird. Die Aufgabe wird durch ein Verfahren gemäß Anspruch 1 gelöst. Systemtechnisch wird die Aufgabe durch Anspruch 3 gelöst. Anspruch 8 widmet sich einem dazugehörigen Computerprogrammprodukt, wogegen ein korrespondierendes computerlesbares Medium Gegenstand von Anspruch 9 ist.

Die Erfindung schließt die verfahrenstechnische Lehre ein, dass nach Detektion eines Unfalls des Fahrzeuges über eine Sensorik einer automatischen Unfallüberwachungseinheit im Fahrzeug und Feststellen der zugeordneten aktuellen geographischen Unfallkoordinaten des Fahrzeugs per Ortungssystem erfindungsgemäß zumindest diese Unfallkoordinaten zu einer zentralen Rufeinheit zwecks Zuordnung derselben zu einer dort zentral hinterlegten digitalen Karte zur Gewinnung einer kartographischen Unfallposition als Textinformation übertragen wird. Durch die zentrale Rufeinheit wird anschließend diese Textinformation über die festgestellte kartographische Unfallposition in eine Sprachinformation konvertiert, um diese Sprachinformation schließlich von der zentralen Rufeinheit an die Rettungsleitstelle per Sprachkanal zu übertragen.

Unter dem Begriff "Sprachkonvertierung" ist eine Medienkonvertierung gemeint, also die Überführung, Umwandlung oder Konvertierung einer Datei von einem Dateiformat in ein anderes. Das gilt für den Transfer von Daten zwischen unterschiedlichen Medien und Dateisystemen ebenso, wie für die Übertragung von Daten von einem Speichermedium auf ein anderes. Die empfangenen Textdaten werden beispielsweise in Videodaten oder Audiodaten umgewandelt, die von vielen Endgeräten, wie z.B. Mobiltelefonen, dargestellt werden können.

An dieser Stelle sei darauf hingewiesen, dass im Kontext der vorliegenden Erfindung GPS stellvertretend für sämtliche globale Navigationssatellitensysteme (GMSS) steht, wie z. B. GPS, Galileo, GLONASS (Russland), Compass (China), IRNSS (Indien), ...

Bei dem Fahrzeug handelt es sich beispielsweise um ein Kraftfahrzeug, wie Auto, Bus oder Lastkraftwagen, oder aber auch um ein Schienenfahrzeug, ein Schiff, ein Luftfahrzeug, wie Helikopter oder Flugzeug, oder beispielsweise um ein Fahrrad.

Der Vorteil der erfindungsgemäßen Lösung besteht insbesondere darin, dass durch die Verlagerung der Text-to-Speech-Funktionalität an eine zentrale Stelle die Unfallüberwachungseinheit im Fahrzeug diese Funktionalität nicht mit abdecken muss, was deren Herstellung vereinfacht. Denn es ist seitens der dezentralen Unfallüberwachungseinheit im Zuge der erfindungsgemäßen Lösung vergleichsweise weniger Rechenleistung erforderlich. Die zentral laufende Text-to-Speech-Anwendung lässt sich zudem automatisieren und es kann sichergestellt werden, dass das dort hinterlegte Kartenmaterial stets aktuell ist. Somit wird auch ein ansonsten übliches Update digitaler Karten im Fahrzeug erspart. Durch das Umwandeln der Textinformation in eine Sprachinformation seitens der zentralen Rufeinheit brauchen technische Umrüstungen in Kommunikationsrichtung zur Rettungsleitstelle nicht vorgenommen werden. Es können daher herkömmliche Sprachkanäle weiter benutzt werden, so dass sich eine Umrüstung der technischen Ausstattung der Rettungsleitstelle erübrigt.

Im Rahmen der vorliegenden Erfindung wird unter geographische Unfallkoordinaten ein Datensatz verstanden, der lediglich Längen- und Breitengradangaben bezüglich eines terrestrischen Koordinatensystems enthält. Es handelt sich vorzugsweise um die Koordinaten, welche eine GPS-Einheit ausgibt. Dagegen wird der Begriff kartographische Unfallposition hier verstanden als eine Art Postadresse, wie Land, Ort, Strasse, Hausnummer oder Kilometermarke auf Autobahnen. Eine solche kartographische Unfallposition könnte der Ausgabeinformation eines Fahrzeugnavigationssystems entsprechen. Als Rettungsleitstelle wird hier beispielsweise die Unfallstation eines Krankenhauses verstanden, welche mit Kommunikationstechnik ausgestattet ist, um eingehende Unfallmitteilung an Einsatzfahrzeuge weiterzugeben, damit diese Hilfe am Unfallort leisten können. Eine Rettungsleitstelle kann jedoch auch mobiler Natur sein, in dem diese direkt in einem Einsatzfahrzeug eingerichtet ist. Ein Netz solcher Rettungsleitstellen mit definierter territorialer Zuständigkeit bildet eine organisatorische Vorraussetzung zur Gewährleistung einer schnellen Unfallhilfe.

Gemäß der Erfindung wird vorgeschlagen, dass nach erfolgter Übermittlung der Sprachinformation von der zentralen Rufeinheit an die Rettungsleitstelle ein direkter Sprachkanal von dieser zum verunfallten Fahrzeug hin hergestellt wird. Über diesen dann die Rettungsleitstelle direkt, also unter Umgehung der zentralen Rufeinheit, weitere Detailinformationen erhalten, um die schwere des Unfalls und die erforderlichen Hilfsmaßnahmen zu planen.

In umgekehrter Informationsrichtung ist es auch denkbar, während der Übermittlung der Sprachinformation von der zentralen Rufeinheit an die Rettungsstelle einen provisorischen Sprachkanal vom verunfallten Fahrzeug zur zentralen Rufeinheit herzustellen, damit hierüber weitere Mitteilung der Fahrzeuginsassen an die Rettungskräfte abgesetzt werden können, beispielsweise hinsichtlich Anzahl verunfallter Personen, Art der Schäden, Grad der Schäden und zusätzliche Hilfsmaßnahmen, wie Feuerwehr, Polizei und dergleichen. Die zentrale Rufeinheit sendet diese Informationen dann an die zuständige Rettungsleitstelle weiter. Zu diesem Zwecke ist die zentrale Rufeinheit beispielsweise mit einem Operator besetzt, also einer Person zur Entgegennahme und Weiterleitung dieser zusätzlichen Sprachinformationen. Diese Funktionalität kann ggf. auch durch einen Callcenter-Service-Provider übernommen werden.

Gemäss der Erfindung ist es vorgesehen, dass die Fahrzeuginsassen Mitteilungen an eine automatisierte Rufeinheit leiten können, welche vergleichbar mit einer Anrufbeantworterfunktion die Sprachmitteilungen zwischenspeichert, um diese unverzüglich an die Rettungsleitstelle weiterzuleiten, automatisch direkt nach der Sprachumwandlung ähnlich einer sogenannten "time-shift"-Funktion bei Videorekordern.

In systemtechnischer Hinsicht bildet seitens der zentralen Rufeinheit ein Computerserver die Kernkomponente. Dieser Computerserver umfasst eine Navigations-Anwendungseinheit mit angeschlossener zentraler digitaler Karte zum Umsetzen der geographischen Unfallkoordinaten in die kartographische Unfallposition. Darüber hinaus lässt sich in diesen Computerserver auch die erforderliche Text-to-Speech-Anwendungseinheit implementieren, so dass die zentrale Rufeinheit auf diesem Wege auch die Umwandlung der Textinformation über die Unfallposition in eine Sprachinformation durchführen kann. Als Beispiel ist es auch denkbar, die Text-to-Speech-Anwendungseinheit manuell umzusetzen, in dem ein Operator diese Aufgabe übernimmt. Dies macht vor allem im Sinne einer organisatorischen Sicherheitsmaßnahme zur Reaktion auf einen Ausfall der automatischen Text-to-Speech-Anwendung Sinn.

Der Operator kann gleichzeitig auch zum provisorischen Entgegennehmen von Mitteilung der Fahrzeuginsassen von dem verunfallten Fahrzeug für die Rettungsleitstelle tätig sein.

Während sich das Ortungssystem im Fahrzeug auf das globale Positioning System (GPS) stützen kann, um die geographischen Unfallkoordinaten zu gewinnen, wird vorgeschlagen, dass die digitale Karte, welche hierauf basierend dann die kartographische Unfallposition gewinnt, in kurzen Zeitabständen - vorzugsweise täglich - aktualisiert wird.

Vorteilhafterweise sollten neben der digitalen Karte, enthaltend statische Verkehrsinformationen über Straßenverläufe, Straßenbenennungen und dergleichen auch dynamische Verkehrsinformationen über Straßensperrungen und dergleichen berücksichtigt. Hierdurch wird die zentrale Rufeinheit in die Lage versetzt, der Rettungsleitstelle erforderlichenfalls eine erreichbare Adresse zu übermitteln, welche möglichst nahe am tatsächlichen Unfallort liegt. Diese Funktionalität kann alternativ hierzu jedoch auch durch eine dynamische Routenführung des Rettungsfahrzeuges übernommen werden.

Gemäß einer anderen bevorzugten Maßnahme wird vorgeschlagen, dass der Sprachkanal zwischen zentraler Rufeinheit und Rettungsleitstelle ein Mobilfunknetz ist, falls die Rettungsleitstelle in einem Fahrzeug untergebracht ist. Sollte die Rettungsleitstelle dagegen in einem Gebäude angesiedelt sein, so könnte auf das Festnetz zurückgegriffen werden, welches gewöhnlich eine stabilere Informationsübertragung bietet.

Die erfindungsgemäße Lösung lässt sich auch als Computerprogrammprodukt verkörpern, welches, wenn es auf einem Prozessor der zentralen Rufeinheit ausgeführt wird, den Prozessor softwaremäßig anleitet, die zugeordneten erfindungsgegenständlichen Verfahrensschritte durchzuführen.

In diesem Zusammenhang gehört auch ein computerlesbares Medium zum Gegenstand der Erfindung, auf dem ein vorstehend beschriebenes Computerprogrammprodukt abrufbar gespeichert ist.

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: eine schematische Darstellung eines Systems zum Absetzen eines Notrufs von einem verunfallten Fahrzeug an eine Rettungsleitstelle, und
- Figur 2: ein Flussdiagramm eines über das System gemäß Figur 1 durchgeführten Verfahrens zum Absetzen des Notrufs.

Die Darstellungen in den Figuren sind schematisch und nicht maßstäblich.

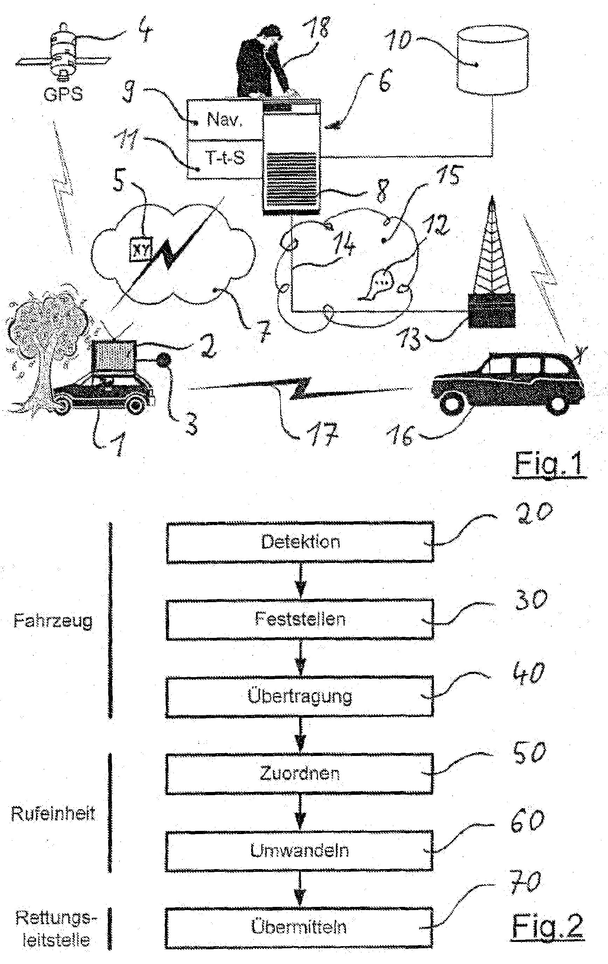

Gemäß Figur 1 enthält ein verunfalltes Fahrzeug 1 eine Unfallüberwachungseinheit 2, welche als Elektronikbox ausgeführt an das Bordnetzsystem des Fahrzeugs 1 zwecks Spannungsvorsorgung angeschlossen ist. Die Unfallüberwachungseinheit 2 steht mit einer Sensorik 3 in Verbindung, welche das Unfallereignis detektiert. Hierdurch ausgelöst, werden von der Unfallüberwachungseinheit 2 die geographischen Unfallkoordinaten des Fahrzeugs 1 erfasst, und zwar über ein Ortungssystem 4, welches als GPS ausgebildet ist. Vom Fahrzeug 1 werden anschließend die geographischen Unfallkoordinaten 5 als Datensatz per Mobilfunk 7 an eine zentrale Rufeinheit 6 gesendet.

Die zentrale Rufeinheit 6 besteht hier aus einem Computerserver 8 mit einer Navigations-Anwendungseinheit 9, an welcher eine zentrale digitale Karte 10 angeschlossen ist. Weiterhin ist im Computerserver 8 eine Text-to-Speech-Anwendungseinheit 11 implementiert.

Die zentrale Rufeinheit 6 ermittelt aus den empfangenen geographischen Unfallkoordinaten 5 durch Nutzung der Navigations-Anwendungseinheit 9 mit angeschlossener zentraler digitaler Karte 10 die kartographische Unfallposition 12 in Form einer postalischen Adresse. Diese Textinformation wird durch die Text-to-Speech-Anwendungseinheit 11 in eine Sprachinformation 12 umgewandelt, um die Sprachinformation 12 von der zentralen Rufeinheit 6 an eine Rettungsleitstelle 13 per Sprachkanal 14 zu ermitteln.

Der Sprachkanal 14 ist in diesem Ausführungsbeispiel über ein Festnetz 15, hier normales Telefonnetz, geschaltet, da sowohl die Rufeinheit 6 als auch die Rettungsleitstelle 13 immobil in einem Gebäude untergebracht sind. Die Rettungsleitstelle 13 koordiniert den Einsatz des Rettungsfahrzeuges 16. Dieses ist zusätzlich in der Lage über einen ebenfalls per Mobilfunknetz 7 schaltbaren Sprachkanal 17 direkten Kontakt mit den Insassen des Fahrzeugs 1 aufzunehmen.

Darüber hinaus besteht die Möglichkeit, dass die Insassen des Fahrzeugs im Zeitbereich während der Übermittlung der Unfallkoordinaten 5 zur Rufeinheit 6 und deren Tätigkeit zur Alarmierung der Rettungsleitstelle 13 auch zumindest provisorisch Mitteilungen der Fahrzeuginsassen entgegenzunehmen, um diese dann anschließend an die Rettungsleitstelle 13 weiter zu leiten. Da derartige Mitteilungen der Fahrzeuginsassen des Fahrzeugs 1 per Sprachkommunikation erfolgen, ist der Rufeinheit 6 beispielsweise ein Operator 18 zur Erfüllung dieser Vermittlungstätigkeit zugeordnet. Hierdurch sind unabhängig vom automatischen System die Insassen des Fahrzeugs 1 in der Lage, manuell Hilfe anzufordern oder unfallrelevante Zusatzinformationen abzusetzen.

Gemäß Figur 2 arbeitet das vorstehend beschriebene System zum Absetzen eines Notrufs nach der Abfolge der nachfolgenden Verfahrensschritte:
Zunächst erfolgt eine Detektion 20 eines Unfalls durch die fahrzeugintegrierte Überwachungseinheit. Anschließend wird ein Feststellen 30 der aktuellen geographischen Unfallkoordinaten des Fahrzeugs per GPS durchgeführt, um nachher eine Übertragung 40 dieser Unfallkoordinaten zu einer zentralen Rufeinheit durchzuführen, welche ein Zuordnen 50 derselben zu einer dort zentral hinterlegten digitalen Karte vornimmt, um eine kartographische Unfallposition als Textinformation in Form einer Adresse zu bestimmen. Die zentrale Rufeinheit nimmt anschließend ein Umwandeln 60 der Textinformation über die festgestellte kartographische Unfallposition in eine Sprachinformation vor, um diese schließlich durch Übermitteln 70 von der zentralen Rufeinheit an eine Rettungsleitstelle per Sprachkanal zu übertragen.

Erfindungsgemäß ist die zentrale Rufeinheit voll automatisch, d.h. ohne Operator, zu betreiben, um aus den eingangsseitig eingehenden Unfallkoordinaten eine Sprachinformation an die zuständige Rettungsstelle zu generieren.

Die erfindungsgemäße Lösung ist nicht beschränkt auf die Darstellungen im vorstehend beschriebenen Ausführungsbeispiel. Es sind vielmehr auch Abwandlungen hiervon denkbar, welche vom Schutzbereich der nachfolgenden Ansprüche mit umfasst sind. Die erfindungsgemäße Lösung ist flexibel hinsichtlich der Telekommunikationsnetze. Beispielsweise kann die Rettungsleitstelle auch mobil auf einem Fahrzeug integriert sein, so dass sich zur Übertragung der Sprachinformation von der Rufeinheit zur insoweit mobilen Rettungsleitstelle auch das Mobilfunknetz eignet.

Ergänzend sei darauf hingewiesen, dass "umfassend" und "aufweisend" keine anderen Elemente oder Schritte ausschließt und "eine" oder "ein" keine Vielzahl ausschließt. Ferner sei darauf hingewiesen, dass Merkmale oder Schritte, die mit Verweis auf eines der obigen Ausführungsbeispiele beschrieben worden sind, auch in Kombination mit anderen Merkmalen oder Schritten anderer oben beschriebener Ausführungsbeispiele verwendet werden können. Bezugszeichen in den Ansprüchen sind nicht als Einschränkungen anzusehen.

### Bezugszeichenliste

- 1: Fahrzeug
- 2: Unfallüberwachungseinheit
- 3: Sensorik
- 4: Ortungssystem
- 5: Sprachinformation
- 6: Rufeinheit
- 7: Mobilfunknetz
- 8: Computerserver
- 9: Navigations-Anwendungseinheit
- 10: digitale Karte
- 11: Text-to-Speech-Anwendungseinheit
- 12: Sprachinformation
- 13: Rettungsleitstelle
- 14: Sprachkanal
- 15: Festnetz
- 16: Sprachkanal
- 17: Sprachkanal
- 18: Operator

- 20: Detektion im Fahrzeug
- 30: Feststellen im Fahrzeug
- 40: Übertragung zur zentralen Rufeinheit
- 50: Zuordnen in der zentralen Rufeinheit
- 60: Umwandeln in der zentralen Rufeinheit
- 70: Übermitteln zur Rettungsleitstelle

## Patentansprüche

1. Verfahren zum Absetzen eines Notrufs von einem verunfallten Fahrzeug (1) an eine Rettungsleitstelle (13) per Text-to-Speech Methode, aufweisend die Schritte:
- Detektion eines Unfalls des Fahrzeugs (1) über eine Sensorik (3) einer automatischen Unfallüberwachungseinheit (2) im Fahrzeug (1),
- Feststellen der zugeordneten geographischen Unfallkoordinaten (5) des Fahrzeugs (1) per Ortungssystem, und
- Senden zumindest der Unfallkoordinaten (1) zu einer zentralen Rufeinheit (6) zum Zuordnen derselben zu einer dort zentral hinterlegten digitalen Karte (10) zwecks Gewinnung einer kartographischen Unfallposition als Textinformation,
- Umwandeln der Textinformation über die festgestellte kartographische Unfallposition (5) durch die zentrale Rufeinheit (6) in eine Sprachinformation (12),
- Übermitteln der Sprachinformation (12) von der zentralen Rufeinheit (6) an die Rettungsleitstelle (13) per Sprachkanal (14)
**dadurch gekennzeichnet, dass**
während der Übermittlung der Sprachinformation (14) von der zentralen Rufeinheit (6) an die Rettungsleitstelle (13) Sprachmitteilungen der Fahrzeuginsassen des verunfallten Fahrzeugs (1) von der zentralen Rufeinheit (6) automatisch zwischengespeichert werden, um diese nach erfolgter Übermittlung der Sprachinformation (14) an die Rettungsleitstelle (13) automatisch weiterzuleiten, wobei nach erfolgter Übermittlung der Sprachinformation (12) von der zentralen Rufeinheit (6) an die Rettungsleitstelle (13) ein direkter Sprachkanal (17) von der Rettungsleitstelle (13) zum verunfallten Fahrzeug (1) hergestellt wird.

2. Verfahren nach Anspruch 1,
**dadurch gekennzeichnet, dass** während der Übermittlung der Sprachinformation (12) von der zentralen Rufeinheit (6) an die Rettungsleitstelle (13) ein provisorischer Sprachkanal zur Übertragung von Mitteilungen der Fahrzeuginsassen von dem verunfallten Fahrzeug (1) zur zentralen Rufeinheit (6) hergestellt wird.

3. **System zum Absetzen eines Notrufs von einem verunfallten Fahrzeug (1) an eine Rettungsleitstelle (13) per Text-to-Speech Methode,** das System aufweisend:
- eine automatische Unfallüberwachungseinheit (2) im Fahrzeug (1) zur Detektion eines Unfalls des Fahrzeugs (1) über eine Sensorik (3), umfassend ein Ortungssystem (4) zum Feststellen der aktuellen geographischen Unfallkoordinaten (5) des Fahrzeugs (1), wobei die Unfallüberwachungseinheit (2) derart gestaltet ist, dass sie die Unfallkoordinaten (5) zu einer zentralen Rufeinheit (6) zum Zuordnen derselben zu einer dort zentral hinterlegten digitalen Karte (10) zwecks Gewinnung einer kartographischen Unfallposition als Textinformation überträgt,
- die zentrale Rufeinheit (6), die derart gestaltet ist, dass sie die Textinformation in eine Sprachinformation (12) umwandelt und die Sprachinformation (12) an die Rettungsleitstelle (13) per Sprachkanal (14) übermittelt,
**dadurch gekennzeichnet, dass** die Rufeinheit (6) weiter gestaltet ist, um:
- während der Übermittlung der Sprachinformation (14) von der zentralen Rufeinheit (6) an die Rettungsleitstelle (13) Sprachmitteilungen der Fahrzeuginsassen des verunfallten Fahrzeugs (1) automatisch zwischenzuspeichern und diese Sprachmitteilungen nach erfolgter Übermittlung der Sprachinformation (14) an die Rettungsleitstelle (13) automatisch weiterzuleiten;
wobei das System derart gestaltet ist, um nach erfolgter Übermittlung der Sprachinformation (12) von der zentralen Rufeinheit (6) an die Rettungsleitstelle (13) ein direkter Sprachkanal (17) von der Rettungsleitstelle (13) zum verunfallten Fahrzeug (1) herzustellen.

4. System nach Anspruch 3,
**dadurch gekennzeichnet, dass** die zentrale Rufeinheit (6) als ein Computerserver (8), umfassend eine Navigations-Anwendungseinheit (9) mit angeschlossener zentraler digitaler Karte (10) sowie Text-to-Speech-Anwendungseinheit (11) ausgebildet ist.

5. System nach Anspruch 3,
**dadurch gekennzeichnet, dass** das Ortungssystem (4) im Fahrzeug (4) auf ein globales Satelliten-Navigationssystem (GPS) zur Gewinnung der geographischen Unfallkoordinaten zurückgreift.

6. System nach Anspruch 3,
**dadurch gekennzeichnet, dass** der Sprachkanal (14) zwischen zentraler Rufeinheit (6) und Rettungsleitstelle (13) über ein Mobilfunknetz (7) aufgebaut wird, falls die Rettungsleitstelle (13) in einem Fahrzeug untergebracht ist.

7. System nach Anspruch 3,
**dadurch gekennzeichnet, dass** der Sprachkanal (14) zwischen zentraler Rufeinheit (6) und Rettungsleitstelle (13) über ein Festnetz (15) aufgebaut wird, falls die Rettungsleitstelle (13) in einem Gebäude untergebracht ist.

8. Computerprogrammprodukt, das, wenn es auf einem Prozessor einer zentralen Rufeinheit (6) gemäß einem der vorstehenden Ansprüche 3 bis 7 ausgeführt wird,
den Prozessor anleitet, die folgenden Schritte durchzuführen:
- Zuordnen der empfangenen Unfallkoordinaten (5) zu einer zentral hinterlegten digitalen Karte (10) zwecks Gewinnung einer kartographischen Unfallposition als Textinformation,
- Umwandeln der Textinformation über die festgestellte kartographische Unfallposition (5) in eine Sprachinformation (12),
- Übermitteln der Sprachinformation (12) von der zentralen Rufeinheit (6) an die Rettungsleitstelle (13) per Sprachkanal (14),
- während der Übermittlung der Sprachinformation (14) von der zentralen Rufeinheit (6) an die Rettungsleitstelle (13) Sprachmitteilungen der Fahrzeuginsassen des verunfallten Fahrzeugs (1) automatisch zwischenspeichern und diese Sprachmitteilungen nach erfolgter Übermittlung der Sprachinformation (14) an die Rettungsleitstelle (13) automatisch weiterleiten.

9. Computerlesbares Medium, auf dem ein Computerprogrammprodukt gespeichert ist, das, wenn es auf einem Prozessor einer zentralen Rufeinheit (6) gemäß einem der vorstehenden Ansprüche 3 bis 7 ausgeführt wird, den Prozessor anleitet, die folgenden Schritte durchzuführen:
- Zuordnen der empfangenen Unfallkoordinaten (5) zu einer zentral hinterlegten digitalen Karte (10) zwecks Gewinnung einer kartographischen Unfallposition als Textinformation,
- Umwandeln der Textinformation über die festgestellte kartographische Unfallposition (5) in eine Sprachinformation (12),
- Übermitteln der Sprachinformation (12) von der zentralen Rufeinheit (6) an die Rettungsleitstelle (13) per Sprachkanal (14),
- während der Übermittlung der Sprachinformation (14) von der zentralen Rufeinheit (6) an die Rettungsleitstelle (13) Sprachmitteilungen der Fahrzeuginsassen des verunfallten Fahrzeugs (1) automatisch zwischenspeichern und diese Sprachmitteilungen nach erfolgter Übermittlung der Sprachinformation (14) an die Rettungsleitstelle (13) automatisch weiterleiten.

## Claims

1. Method for placing an emergency call from a vehicle (1) in an accident to a rescue co-ordination center (13) by text-to-speech method, exhibiting the steps:
- detection of an accident of the vehicle (1) via a sensor system (3) of an automatic accident monitoring unit (2) in the vehicle (1),
- determining the associated geographic accident co-ordinates (5) of the vehicle (1) by positioning system, and
- sending at least the accident co-ordinates (5) to a central call unit (6) for correlating these with a digital map (10) centrally stored there for the purpose of obtaining a cartographic accident position as text information,
- conversion by the central call unit (6) of the text information about the cartographic accident position (5) determined into voice information (12),
- transmitting the voice information (12) from the central call unit (6) to the rescue co-ordination center (13) by voice channel (14),
**characterized in that**, during the transmission of the voice information (14) from the central call unit (6) to the rescue co-ordination center (13), voice messages of the vehicle passengers of the vehicle (1) in an accident are automatically temporarily stored by the central call unit (6) in order to automatically forward these to the rescue co-ordination center (13) after completed transmission of the voice information (14), wherein after completed transmission of the voice information (12) from the central call unit (6) to the rescue co-ordination center (13), a direct voice channel (17) is established from the rescue co-ordination center (13) to the vehicle (1) in the accident.

2. Method according to Claim 1, **characterized in that** during the transmission of the voice information (12) from the central call unit (6) to the rescue co-ordination center (13), a provisional voice channel is established for transmitting messages of the vehicle passengers from the vehicle (1) in the accident to the central call unit (6).

3. System for placing an emergency call from a vehicle (1) in an accident to a rescue co-ordination center (13) by text-to-speech method, the system having:
- an automatic accident monitoring unit (2) in the vehicle (1) for detecting an accident of the vehicle (1) via a sensor system (3), comprising a positioning system (4) for determining the current geographic accident co-ordinates (5) of the vehicle (1), wherein the accident monitoring unit (2) is configured in such a way that it transmits the accident co-ordinates (5) to a central call unit (6) for correlating them with a digital map (10) stored there centrally, for obtaining a cartographic accident position as text information,
- the central call unit (6) which is configured in such a way that it converts the text information into voice information (12) and transmits the voice information (12) by voice channel (14) to the rescue co-ordination center (13), **characterized in that** the call unit (6) is further configured:
- to automatically temporarily store voice messages of the vehicle passengers of the vehicle (1) in an accident during the transmission of the voice information (14) from the central call unit (6) to the rescue co-ordination center (13) and to automatically forward these voice messages to the rescue co-ordination center (13) after completed transmission of the voice information (14); wherein the system is configured to establish a direct voice channel (17) from the rescue co-ordination center (13) to the vehicle (1) in the accident after completed transmission of the voice information (12) from the central call unit (6) to the rescue co-ordination center (13).

4. System according to Claim 3, **characterized in that** the central call unit (6) is constructed as a computer server (8) comprising a navigation application unit (9) with connected central digital map (10) and text-to-speech application unit (11).

5. System according to Claim 3, **characterized in that** the positioning system (4) in the vehicle (4) accesses a global satellite navigation system (GPS) for obtaining the geographic accident co-ordinates.

6. System according to Claim 3, **characterized in that** the voice channel (14) between the central call unit (6) and the rescue co-ordination center (13) is set up by a mobile radio network (7) if the rescue co-ordination center (13) is accommodated in a vehicle.

7. System according to Claim 3, **characterized in that** the voice channel (14) between the central call unit (6) and the rescue co-ordination center (13) is set up via a landline network (15) if the rescue co-ordination center (13) is accommodated in a building.

8. Computer program product which, when it is executed on a processor of a central call unit (6) according to one of the preceding Claims 3 to 7 instructs the processor to carry out the following steps:
- correlating the received accident co-ordinates (5) with a centrally stored digital map (10) for obtaining a cartographic accident position as text information,
- converting the text information about the cartographic accident position (5) determined into voice information (12),
- transmitting the voice information (12) by voice channel (14) from the central call unit (6) to the rescue co-ordination center (13),
- automatically temporarily storing voice messages of the vehicle passengers of the vehicle (1) in an accident during the transmission of the voice information (14) from the central call unit (6) to the rescue co-ordination center (13) and automatically forwarding these voice messages to the rescue co-ordination center (13) after completed transmission of the voice information (14).

9. Computer-readable medium on which a computer program product is stored which, when it is executed on a processor of a central call unit (6) according to one of the preceding Claims 3 to 7 instructs the processor to carry out the following steps:
- correlating the received accident co-ordinates (5) with a centrally stored digital map (10) for obtaining a cartographic accident position as text information,
- converting the text information about the cartographic accident position (5) determined into voice information (12),
- transmitting the voice information (12) by voice channel (14) from the central call unit (6) to the rescue co-ordination center (13),
- automatically temporarily storing voice messages of the vehicle passengers of the vehicle (1) in an accident during the transmission of the voice information (14) from the central call unit (6) to the rescue co-ordination center (13) and automatically forwarding these voice messages to the rescue co-ordination center (13) after completed transmission of the voice information (14).

## Revendications

1. Procédé pour envoyer un appel d'urgence d'un véhicule accidenté (1) à un centre de secours (13) selon une méthode de synthèse de texte en parole, comprenant les étapes suivantes :
- détecter un accident du véhicule (1) par l'intermédiaire d'un système de capteurs (3) d'une unité de surveillance automatique d'accident (2) dans le véhicule (1),
- établir les coordonnées géographiques associées (5) de l'accident du véhicule (1) par l'intermédiaire d'un système de localisation, et
- envoyer au moins les coordonnées de l'accident (1) à un centre d'appel (6) pour les associer à une carte numérique (10) qui y est stockée de manière centralisée dans le but d'obtenir une position cartographique de l'accident sous la forme d'une information textuelle,
- convertir l'information textuelle concernant la position cartographique (5) établie de l'accident au moyen du centre d'appel (6) en une information vocale (12),
- transmettre l'information vocale (12) du centre d'appel (6) au centre de secours (13) par l'intermédiaire d'un canal vocal (14),
**caractérisé en ce que**,
pendant la transmission de l'information vocale (14) du centre d'appel (6) au centre de secours (13), des messages vocaux des occupants du véhicule accidenté (1) sont automatiquement stockés de manière temporaire par le centre d'appel (6) afin de réacheminer automatiquement ces derniers après que la transmission de l'information vocale (14) au centre de secours (13) a été effectuée, dans lequel, après que la transmission de l'information vocale (12) du centre d'appel (6) au centre de secours (13) a été effectuée, un canal vocal direct (17) du centre de secours (13) au véhicule accidenté (1) est établi.

2. Procédé selon la revendication 1, **caractérisé en ce que**, pendant la transmission de l'information vocale (12) du centre d'appel (6) au centre de secours (13), un canal vocal provisoire est établi pour transmettre des messages des occupants du véhicule, du véhicule accidenté (1) au centre d'appel (6).

3. Système pour envoyer un appel d'urgence d'un véhicule accidenté (1) à un centre de secours (13) par l'intermédiaire d'une méthode de synthèse de texte en parole, le système comprenant :
- une unité de surveillance automatique d'accident (2) dans le véhicule (1) pour détecter un accident du véhicule (1) par l'intermédiaire d'un système de capteurs (3), comprenant un système de localisation (4) pour établir les coordonnées géographiques actuelles (5) de l'accident du véhicule (1), dans lequel l'unité de surveillance d'accident (2) est conçue de manière à ce qu'elle transmette les coordonnées de l'accident (5) à un centre d'appel (6) pour les associer à une carte numérique (10) qui y est stockée de manière centralisée dans le but d'obtenir une position cartographique de l'accident sous la forme d'une information textuelle,
- le centre d'appel (6), qui est conçu manière à convertir l'information textuelle en une information vocale (12) et à transmettre l'information vocale (12) au centre de secours (13) par l'intermédiaire d'un canal vocal (14),
**caractérisé en ce que** le centre d'appel (6) est en outre conçu pour :
- pendant la transmission de l'information vocale (14) du centre d'appel (6) au centre de secours (13), stocker automatiquement de manière temporaire des messages vocaux des occupants du véhicule accidenté (1) et réacheminer automatiquement ces messages vocaux après que la transmission de l'information vocale (14) au centre de secours (13) a été effectuée ;
dans lequel le système est conçu pour établir un canal vocal direct (17) du centre de secours (13) au véhicule accidenté (1) après que la transmission de l'information vocale (12) du centre d'appel (6) au centre de secours (13) a été effectuée.

4. Système selon la revendication 3, **caractérisé en ce que** le centre d'appel (6) est réalisé sous la forme d'un serveur d'ordinateur (8) comprenant une unité d'application de navigation (9) comportant une carte numérique centralisée connectée (10) ainsi qu'une unité d'application de synthèse de texte en parole (11).

5. Système selon la revendication 3, **caractérisé en ce que** le système de localisation (4) présent dans le véhicule (4) a recours à un système global de navigation par satellite (GPS) pour obtenir les coordonnées géographiques de l'accident.

6. Système selon la revendication 3, **caractérisé en ce que** le canal vocal (14) entre le centre d'appel (6) et le centre de secours (13) est établi par l'intermédiaire d'un réseau de téléphonie mobile (7) dans le cas où le centre de secours (13) est installé dans un véhicule.

7. Système selon la revendication 3, **caractérisé en ce que** le canal vocal (14) entre le centre d'appel (6) et le centre de secours (13) est établi par l'intermédiaire d'un réseau fixe (15) dans le cas où le centre de secours (13) est installé dans un bâtiment.

8. Produit de programme d'ordinateur qui, lorsqu'il est exécuté sur un processeur d'un centre d'appel (6) selon l'une quelconque des revendications 3 à 7 précédentes, ordonne au processeur d'effectuer les étapes suivantes :
- associer les coordonnées reçues de l'accident (5) à une carte numérique (10) stockée de manière centralisée dans le but d'obtenir une position cartographique de l'accident sous la forme d'une information textuelle,
- convertir l'information textuelle concernant la position cartographique (5) établie de l'accident en une information vocale (12),
- transmettre l'information vocale (12) du centre d'appel (6) au centre de secours (13) par l'intermédiaire d'un canal vocal (14),
- pendant la transmission de l'information vocale (14) du centre d'appel (6) au centre de secours (13), stocker automatiquement de manière temporaire des messages vocaux des occupants du véhicule accidenté (1) et réacheminer automatiquement ces messages vocaux après que la transmission de l'information vocale (14) au centre de secours (13) a été effectuée.

9. Support lisible par ordinateur sur lequel est stocké un produit de programme d'ordinateur qui, lorsqu'il est exécuté sur un processeur d'un centre d'appel (6) selon l'une quelconque des revendications précédentes 3 à 7, ordonne au processeur d'effectuer les suivantes étapes :
- associer les coordonnées reçues de l'accident (5) à une carte numérique (10) stockée de manière centralisée dans le but d'obtenir une position cartographique de l'accident sous la forme d'une information textuelle,
- convertir l'information textuelle concernant la position cartographique (5) établie de l'accident en une information vocale (12),
- transmettre l'information vocale (12) du centre d'appel (6) au centre de secours (13) par l'intermédiaire d'un canal vocal (14),
- pendant la transmission de l'information vocale (14) du centre d'appel (6) au centre de secours (13), stocker automatiquement de manière temporaire des messages vocaux des occupants du véhicule accidenté (1) et réacheminer automatiquement ces messages vocaux après que la transmission de l'information vocale (14) au centre de secours (13) a été effectuée.
